# EUROPÄISCHE PATENTSCHRIFT

(11) **EP 2 483 147 B1**
(45) Veröffentlichungstag und Bekanntmachung des Hinweises auf die Patenterteilung: **04.01.2017**
(21) Anmeldenummer: 10760928.1
(22) Anmeldetag: 24.09.2010
(51) Int. Cl.: B63H 23/32, B63H 23/30

(54) **ANTRIEBSANORDNUNG FÜR WASSERFAHRZEUGE**
DRIVE DEVICE FOR WATERCRAFT
SYSTÈME DE PROPULSION POUR VÉHICULES NAUTIQUES

(30) Priorität: 30.09.2009 DE 202009013178 U
(43) Veröffentlichungstag der Anmeldung: 08.08.2012
(73) Patentinhaber: EagleBurgmann Germany GmbH & Co. KG, 82515 Wolfratshausen (DE)
(72) Erfinder: PFEIL, Dieter, 82547 Eurasburg (DE); SCHERER, Hans-Georg, 82538 Geretsried (DE); BINDER, Jürgen, 82377 Penzberg (DE)
(74) Vertreter: Hoefer & Partner Patentanwälte mbB
(86) Internationale Anmeldenummer: PCT/EP2010/005862
(87) Internationale Veröffentlichungsnummer: WO 2011/038869

(56) Entgegenhaltungen:
- JP-A- 6 190 258
- US-A- 3 310 693
- US-B1- 7 335 071

## Beschreibung

Die Erfindung betrifft eine Antriebsanordnung für Wasserfahrzeuge, insbesondere maritime Fahrzeuge, welche auch unter erschwerten Bedingungen eingesetzt werden können sowie derartige Wasserfahrzeuge.

Wasserfahrzeuge sind aus dem Stand der Technik in unterschiedlichen Ausgestaltungen bekannt. Als Antrieb weisen derartige Wasserfahrzeuge üblicherweise eine konventionelle Wellenanlage auf, bei der eine Welle aus einem Rumpf unterhalb der Wasserlinie herausgeführt ist. Diese Konstruktion bedingt jedoch aufwendige Abdichtungen am Rumpf, um zu verhindern, dass Wasser von außen in das Innere des Wasserfahrzeugs gelangen kann. Ferner ist es möglich, dass Schmierstoffe aus dem Wasserfahrzeug durch den Durchbruch im Rumpf austreten können und so eine Umweltverschmutzung verursachen können. Insbesondere weisen die bisher verwendeten Dichtungen an der Welle immer eine Leckage auf, so dass, wenn zum Teil auch nur in geringen Mengen, ein Schmierstoff, wie z.B. Öl oder Fett, austreten kann.

Dies tritt verstärkt bei Wasserfahrzeugen auf, welche in kalten Gewässern und/oder in großen Tiefen, z.B. Unterwasserrobotern usw., eingesetzt werden.

Ferner ist aus der US 7 335 071 B1 ein Wasserfahrzeug mit den Merkmalen des Oberbegriffes des Anspruches 1 bekannt.

Es ist daher Aufgabe der vorliegenden Erfindung, eine Antriebsanordnung für Wasserfahrzeuge bereitzustellen, welche bei einfachem Aufbau und einfacher, kostengünstiger Herstellbarkeit eine absolute Leckagefreiheit von Schmierstoffen und eine exzellente Wasserdichtheit aufweist.

Diese Aufgabe wird durch eine Antriebsanordnung mit den Merkmalen des Anspruchs 1 gelöst. Die Unteransprüche zeigen bevorzugte Weiterbildungen der Erfindung.

Die erfindungsgemäße Antriebsanordnung umfasst eine Magnetkupplung, welche zwischen einem Propeller und einem Antrieb angeordnet ist. Die Magnetkupplung weist einen Spalttopf auf, welcher an einem Rumpf des Wasserfahrzeugs in abdichtender Weise befestigt ist. Der Spalttopf verschließt somit eine im Rumpf des Wasserfahrzeugs vorgesehene Öffnung, an deren Außenseite der Propeller angeordnet ist. Eine Drehmomentübertragung erfolgt dabei mittels der Magnetkupplung. Die erfindungsgemäße Lösung stellt dabei auf überraschend einfache Weise eine vollständige Leckagefreiheit auch bei schweren Einsatzbedingungen, wie z.B. in kaltem Wasser oder in großen Tiefen, bereit. Dadurch kann die erfindungsgemäße Antriebsanordnung insbesondere bei Wasserfahrzeugen, welche in Verbindung mit einer Öl- und Gasförderung verwendet werden, eingesetzt werden. Die erfindungsgemäße Antriebsanordnung kann dabei bei jeglicher Art von Antrieben, d.h., Propeller-Antrieben oder Gondel-Antrieben oder Schwenk-Antrieben oder Querstrahl-Antrieben, verwendet werden. Auch kann insbesondere bei einer Verwendung der Antriebsanordnung im Seewasserbereich eine Korrosion der Antriebsanordnung vermieden werden. Darüber hinaus ermöglicht die Verwendung der Magnetkupplung auch einen Einsatz bei Tauchrobotern oder anderen autarken Fahrzeugen, welche beispielsweise am Meeresgrund arbeiten und keine Probleme durch Aufwirbelung von Sand o.ä. aufgrund der erfindungsgemäßen Magnetkupplung haben.

Wasserfahrzeugs befestigt, dass sein Innenraum zur Außenseite des Rumpfes gerichtet ist.

Besonders bevorzugt ist im Innenraum des Spalttopfes ein Lager, insbesondere ein Gleitlager, angeordnet. Das Lager wird dabei durch das den Propeller umgebende Wasser geschmiert, so dass kein Öl oder Fett als Schmierstoff notwendig ist.

Weiter bevorzugt ist ein äußeres Magnetelement der Magnetkupplung mit dem Antrieb verbunden. Vorzugsweise ist dabei zwischen dem äußeren Magnetelement und dem Antrieb ein Getriebe zur Änderung der Drehzahl des Antriebs angeordnet. Als Antrieb kann eine Brennkraftmaschine und/oder ein Elektromotor verwendet werden. Alternativ ist das äußere Magnetfeld als Stator eines Elektromotors ausgebildet, so dass die Magnetkupplung teilweise in den Antrieb integriert ist.

Die erfindungsgemäße Antriebsanordnung kann vorzugsweise als Propeller-Antrieb oder als Gondel-Antrieb oder als Schwenk-Antrieb oder als Querstrahl-Antrieb, welcher in einem Rohr angeordnet ist, verwendet werden.

Als Material für das Lager wird vorzugsweise eine Kombination von SiC/SiC verwendet. Der Spalttopf ist aus einem nicht magnetisierbaren Material hergestellt und kann beispielsweise aus einem nicht magnetisierbaren Edelstahl, Hastelloy, Keramik oder CF-Peek hergestellt sein. Ein Lagergehäuse ist vorzugsweise aus Bronze oder Edelstahl, Duplex, oder einer Hochnickellegierung, z.B. Monel, hergestellt.

Nachfolgend wird die Erfindung unter Bezugnahme auf die begleitende Zeichnung im Detail beschrieben. In der Zeichnung ist:
- Fig. 1: eine schematische Schnittansicht einer Antriebsanordnung gemäß einem ersten Ausführungsbeispiel der Erfindung,
- Fig. 2: eine schematische Schnittansicht einer Antriebsanordnung gemäß einem zweiten Ausführungsbeispiel der Erfindung,
- Fig. 3: eine schematische Schnittansicht einer Antriebsanordnung gemäß einem dritten Ausführungsbeispiel der Erfindung, und
- Fig. 4: eine schematische Schnittansicht einer Antriebsanordnung gemäß einem vierten Ausführungsbeispiel der Erfindung.

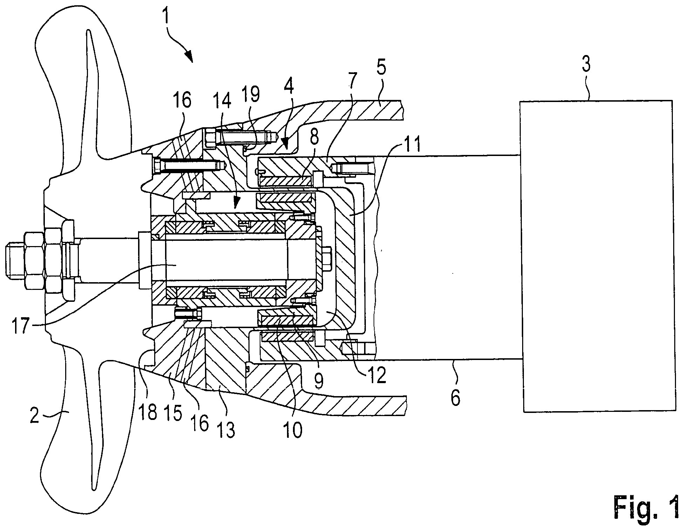

Nachfolgend wird unter Bezugnahme auf Fig. 1 eine Antriebsanordnung 1 für Wasserfahrzeuge im Detail beschrieben.

Die Antriebsanordnung 1 des ersten Ausführungsbeispiels ist ein Propeller-Antrieb, welcher einen Propeller 2 und einen Antrieb 3 umfasst, welcher als Brennkraftmaschine ausgebildet ist. Zwischen dem Antrieb 3 und dem Propeller 2 ist eine Magnetkupplung 4 zur Drehmomentübertragung vom Antrieb 3 auf den Propeller 2 angeordnet.

Die Magnetkupplung 4 umfasst einen Außenrotor 7 mit einer Vielzahl von Permanentmagneten 8, einen Innenrotor 9 mit einer Vielzahl von Permanentmagneten 10 sowie einen zwischen Außenrotor 7 und Innenrotor 9 angeordneten Spalttopf 11. Der Spalttopf 11 ist an einem Schiffskörper 5 über einen Flansch 13 befestigt. Der Flansch 13 ist einstückig mit dem Spalttopf gebildet. Der Spalttopf 11 definiert einen Innenraum 12, in welchem der Innenrotor 9 angeordnet ist. Der Außenrotor 7 ist über eine Antriebswelle 6 mit dem Antrieb 3 verbunden. Der Innenrotor 9 ist über eine Abtriebswelle 17 mit Propeller 2 verbunden. Ein Lager 14 ist im Innenraum 12 des Spalttopfs angeordnet, um die Abtriebswelle 17 zu lagern. Das Lager 14 umfasst ein Lagergehäuse 15, in welchem mehrere Fluidkanäle 16 ausgebildet sind. Die Fluidkanäle 16 dienen dazu, Wasser in den Innenraum 12 des Spalttopfes 11 zuzuführen. Das Lager 14 ist als Gleitlager ausgebildet und weist einen sehr kompakten Aufbau auf. Am Lagergehäuse 15 ist ferner eine Führung 18 an einem stirnseitigen Ende integral gebildet, welche den Propeller 2 führt.

Wie aus Fig. 1 deutlich wird, bildet der Spalttopf 11 eine Trennung zwischen einem Innenbereich des Wasserfahrzeugs und einem Außenbereich. Durch die Verwendung der Magnetkupplung 4 kann somit auf ein Dichtelement, welches mit einer rotierenden Welle in abdichtender Beziehung steht, verzichtet werden. Der Spalttopf 11 kann über eine einfache und kostengünstige, ortsfeste Dichtung 19 mit dem Schiffskörper 5 verbunden werden. Um Verluste bei der Trennwandübertragung vom Außenrotor 7 auf den Innenrotor 9 zu minimieren, ist eine Wandstärke des Spalttopfs 11 sehr klein gewählt. Da der Spalttopf 11 mit beispielsweise Seewasser in Kontakt kommt, ist er aus einem seewasserbeständigen Werkstoff hergestellt. Da die Magnetkupplung 4 keine elastischen Bauteile aufweist, welche beispielsweise bei niederen Wassertemperaturen schrumpfen könnten, kann die erfindungsgemäße Antriebsanordnung problemlos auch in kalten Gewässern eingesetzt werden. Ebenso ist problemlos ein Einsatz bei Unterwasserrobotern oder anderen autarken Fahrzeugen oder Werkzeugen mit Antrieb, z.B. in der Öl- und Gasförderindustrie, möglich. Weiterhin ist die erfindungsgemäße Antriebsanordnung unempfindlich gegenüber Verschmutzungen, welche beispielsweise bei Anwendung von Unterwasserfahrzeugen durch aufgewirbelte Ablagerungen o.ä. auftreten können. Dabei ist eine absolut leckagefreie Abdichtung der Antriebsanordnung möglich.

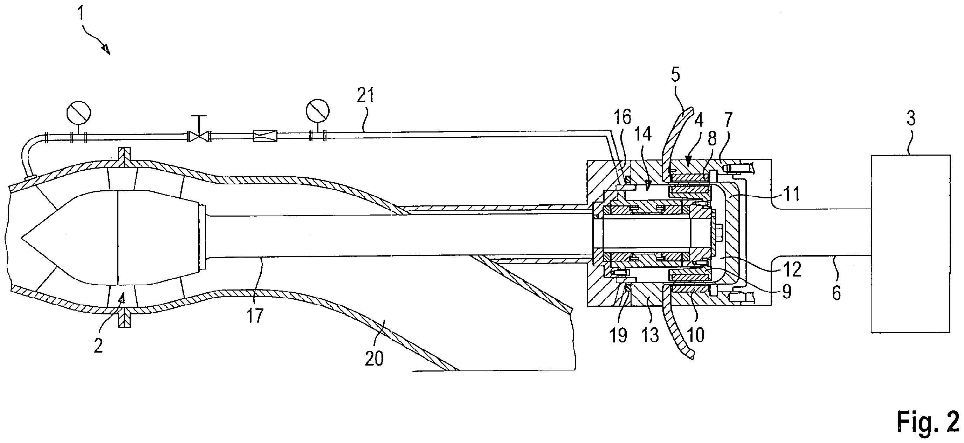

Nachfolgend werden unter Bezugnahme auf die Fig. 2 bis 4 weitere Ausführungsbeispiele der erfindungsgemäßen Antriebsanordnung 1 beschrieben, wobei jeweils gleiche Bauteile mit den gleichen Bezugszeichen wie im ersten Ausführungsbeispiel bezeichnet sind.

Fig. 2 zeigt ein zweites Ausführungsbeispiel, bei dem eine Abtriebswelle 17 verlängert ist und der Propeller 2 in einem Kanal 20 angeordnet ist. Aus dem Kanal 20 wird ferner Wasser über eine Leitung 21 zu einem Fluidkanal 16, der im Lagergehäuse 15 gebildet ist, geführt.

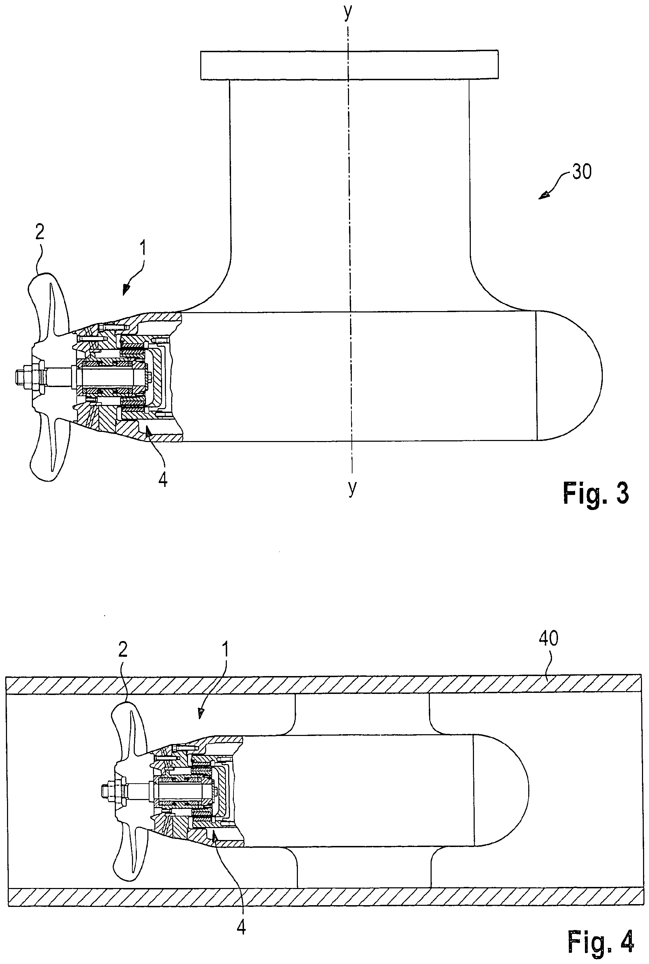

Fig. 3 zeigt eine Antriebsanordnung 1, welche in einem Gondel-Antrieb 30 angeordnet ist. Der Gondel-Antrieb 30 kann sich dabei um seine vertikale Achse Y-Y drehen.

Fig. 4 zeigt eine Antriebsanordnung 1, welche in einem Rohr 40 angeordnet ist. Derartige Antriebe können beispielsweise als Querstrahl-Antriebe ausgebildet sein. Bei den in den Fig. 3 und 4 gezeigten gekapselten Antrieben ist es unabdingbar, dass die jeweilige Antriebsanordnung keine Leckage aufweist, da die Leckage praktisch nicht abgeführt werden kann.

### Bezugszeichenliste

- 1: Antriebsanordnung
- 2: Propeller
- 3: Antrieb
- 4: Magnetkupplung
- 5: Schiffskörper
- 6: Antriebswelle
- 7: äußeres Magnetelement / Außenrotor
- 8: Permanentmagnet
- 9: inneres Magnetelement / Innenrotor
- 10: Permanentmagneten
- 11: Spalttopf
- 12: Innenraum des Spalttopfs 11
- 13: Flansch
- 14: Lager / Gleitlager
- 15: Lagergehäuse
- 16: Fluidkanal
- 17: Abtriebswelle / Propellerwelle
- 18: Führung
- 19: ortsfeste Dichtung
- 20: Kanal
- 21: Leitung

- 30: Gondel-Antrieb
- 40: Rohr

## Patentansprüche

1. Wasserfahrzeug mit einer Antriebsanordnung (1), umfassend
- einen Propeller (2),
- einen Antrieb (3) zum Antreiben des Propellers (2), und
- eine Magnetkupplung (4), welche zwischen dem Propeller (2) und dem Antrieb (3) angeordnet ist,
- **dadurch gekennzeichnet, dass** die Magnetkupplung (4) ein äußeres Magnetelement (7), ein inneres Magnetelement (9) und einen Spalttopf (11) umfasst und wobei der Spalttopf (11) zwischen dem inneren Magnetelement (9) und dem äußeren Magnetelement (7) angeordnet ist, und
- wobei der Spalttopf an einem Rumpf des Wasserfahrzeuges in abdichtender Weise befestigt ist.

2. Wasserfahrzeug nach Anspruch 1, ferner umfassend eine Propellerwelle (17), an welcher der Propeller (2) angeordnet ist, wobei die Propellerwelle (17) zumindest teilweise in den Spalttopf (11) hineinragt.

3. Wasserfahrzeug nach einem der vorhergehenden Ansprüche, **dadurch gekennzeichnet, dass** die Propellerwelle (17) mittels eines Lagers (14), insbesondere eines Gleitlagers, gelagert ist.

4. Wasserfahrzeug nach Anspruch 3, **dadurch gekennzeichnet, dass** das Lager (14) in einem Innenraum (12) des Spalttopfs (11) angeordnet ist.

5. Wasserfahrzeug nach Anspruch 3 oder 4, **dadurch gekennzeichnet, dass** das Lager (14) ein Lagergehäuse (15) aufweist, wobei das Lagergehäuse (15) eine integrierte Führung (18) für den Propeller (2) umfasst.

6. Wasserfahrzeug nach einem der vorhergehenden Ansprüche, **dadurch gekennzeichnet, dass** das äußere Magnetelement (7) mit dem Antrieb (3) verbunden ist, wobei insbesondere zwischen dem äußeren Magnetelement (7) und dem Antrieb (3) ein Getriebe angeordnet ist.

7. Wasserfahrzeug nach einem der vorhergehenden Ansprüche, **dadurch gekennzeichnet, dass** der Antrieb (3) eine Brennkraftmaschine und/oder einen Elektromotor umfasst.

8. Wasserfahrzeug nach einem der Ansprüche 1 bis 6, **dadurch gekennzeichnet, dass** das äußere Magnetelement (7) ein Stator eines Elektromotors ist.

## Claims

1. A water vehicle with a drive device, comprising
- a propeller (2),
- a drive mechanism (3) for driving the propeller (2), and
- a magnetic coupling (4) arranged between the propeller (2) and the drive mechanism (3)
**characterized in that**
- the magnetic coupling (4) comprises an outer magnetic element (7), an inner magnetic element (9) and a can (11), wherein the can (11) is arranged between the inner magnetic element (9) and the outer magnetic element (7), and
- the can (11) is in a waterproof manner attached to an outer wall section of the water vehicle.

2. Water vehicle according to claim 1, further comprising a propeller shaft (17), on which the propeller (2) is arranged, wherein the propeller shaft (17) is at least partially extending into the can (11).

3. Water vehicle according to any one of the preceding claims, **characterized in that** the propeller shaft (17) is supported by means of a bearing (14), in particular by a journal bearing.

4. Water vehicle according to claim 3, **characterized in that** the bearing (14) is arranged in an internal space (12) of the can (11).

5. Water vehicle according to claim 3 or 4, **characterized in that** the bearing (14) comprises a bearing case (15), wherein the bearing case (15) comprises an integrated guiding (18) for the propeller (2).

6. Water vehicle according to any one of the preceding claims, **characterized in that** the outer magnetic element (7) is coupled with the drive mechanism (3), wherein in particular a gear mechanism is arranged between the outer magnetic element (7) and the drive mechanism (3).

7. Water vehicle according to any one of the preceding claims, **characterized in that** the drive mechanism (3) comprises a combustion engine and/or an electric motor.

8. Water vehicle according to any one of claims 1 to 6, **characterized in that** the outer magnetic element (7) is a stator of an electric motor.

## Revendications

1. Véhicule nautique avec un système de propulsion (1), comprenant
- une hélice (2),
- un entraînement (3) pour entraîner l'hélice (2), et
- un accouplement magnétique (4), qui est disposé entre l'hélice (2) et l'entraînement (3),
**caractérisé en ce que** l'accouplement magnétique (4) comprend un élément magnétique extérieur (7), un élément magnétique intérieur (9) et une chemise d'entrefer (11), et sachant que la chemise d'entrefer (11) est disposée entre l'élément magnétique intérieur (9) et l'élément magnétique extérieur (7), et
sachant que la chemise d'entrefer est fixée en étanchéité sur une coque du véhicule nautique.

2. Véhicule nautique selon la revendication 1, comprenant en outre un arbre d'hélice (17) sur lequel est disposée l'hélice (2), sachant que l'arbre d'hélice (17) pénètre au moins partiellement dans la chemise d'entrefer (11).

3. Véhicule nautique selon l'une des revendications précédentes, **caractérisé en ce que** l'arbre d'hélice (17) est monté au moyen d'un palier (14), en particulier d'un palier lisse.

4. Véhicule nautique selon la revendication 3, **caractérisé en ce que** le palier (14) est disposé dans un espace intérieur (12) de la chemise d'entrefer (11).

5. Véhicule nautique selon la revendication 3 ou 4, **caractérisé en ce que** le palier (14) présente un corps de palier (15), sachant que le corps de palier (15) comprend un guide intégré (18) pour l'hélice (2).

6. Véhicule nautique selon l'une des revendications précédentes, **caractérisé en ce que** l'élément magnétique extérieur (7) est relié à l'entraînement (3), sachant notamment qu'une transmission est disposée entre l'élément magnétique extérieur (7) et l'entraînement (3).

7. Véhicule nautique selon l'une des revendications précédentes, **caractérisé en ce que** l'entraînement (3) comprend un moteur à combustion interne et/ou un moteur électrique.

8. Véhicule nautique selon l'une des revendications 1 à 6, **caractérisé en ce que** l'élément magnétique extérieur (7) est un stator d'un moteur électrique.
